# EUROPÄISCHE PATENTSCHRIFT

(11) **EP 3 502 041 B1**
(45) Veröffentlichungstag und Bekanntmachung des Hinweises auf die Patenterteilung: **24.11.2021**
(21) Anmeldenummer: 18210614.6
(22) Anmeldetag: 06.12.2018
(51) Int. Cl.: B66F 9/065, B66F 9/075, B66F 9/12, B66F 7/06, B62D 33/06, B62D 51/02

(54) **FLURFÖRDERZEUG MIT EINEM EINE FAHRERSTANDPLATTFORM UMFASSENDEN FAHRERARBEITSPLATZ**
INDUSTRIAL TRUCK WITH A DRIVER'S PLATFORM CONTAINING DRIVER STATION
CHARIOT DE MANUTENTION DOTÉ D'UN POSTE DE TRAVAIL DE CONDUCTEUR COMPRENANT UNE PLATEFORME SUPPORT DE CONDUCTEUR

(30) Priorität: 21.12.2017 DE 102017130917; 20.04.2018 DE 102018109553
(43) Veröffentlichungstag der Anmeldung: 26.06.2019
(73) Patentinhaber: STILL S.p.A., 20020 Lainate (MI) (IT)
(72) Erfinder: MARIOTTI, Fabio, 42016 Guastalla RE (IT); BORSARI, Luca, 46024 Moglia (IT)
(74) Vertreter: Patentship Patentanwaltsgesellschaft mbH

(56) Entgegenhaltungen:
- EP-A1- 3 176 125
- EP-A2- 2 679 473
- EP-A2- 3 061 678
- DE-A1-102009 058 598

## Beschreibung

Die Erfindung betrifft ein Flurförderzeug mit einem Fahrerarbeitsplatz, der von einer Fahrerstandplattform für eine stehende Bedienperson gebildet ist und an einem Antriebsteil des Flurförderzeugs in Längsrichtung des Flurförderzeugs zwischen einem Batteriefach einer Traktionsbatterie und einer vertikalen Rückwand des Antriebsteils angeordnet ist, wobei die Fahrerstandplattform mittels einer Parallelogrammaufhängung an dem Antriebsteil in vertikaler Richtung bewegbar aufgehängt ist und die Fahrerstandplattform mittels einer Feder-Dämpfereinrichtung, die mindestens ein Federelement und ein Dämpferelement umfasst, an dem Antriebsteil abgestützt ist.

Ein gattungsgemäßes Flurförderzeug ist aus der EP 3 176 125 A1 bekannt.

Die DE 10 2009 058 598 A1 offenbart ein Flurförderzeug mit einem Fahrerarbeitsplatz, der von einer Fahrerstandplattform für eine stehende Bedienperson gebildet ist und an einem Ende des Antriebsteils des Flurförderzeugs mittels einer Parallelogrammaufhängung an dem Rahmen des Flurförderzeugs in vertikaler Richtung bewegbar aufgehängt ist. Die Fahrerstandplattform ist mittels einer Feder-Dämpfereinrichtung, die mindestens ein Federelement und ein Dämpferelement umfasst, an dem Rahmen des Flurförderzeugs abgestützt ist

Bei Flurförderzeugen mit einem eine Fahrerstandplattform aufweisenden Fahrerstand werden von einer auf der Fahrerstandplattform stehenden Bedienperson bedient. Bei derartigen Flurförderzeugen ist es gewünscht, die Fahrerstandplattform über eine Feder-Dämpfereinrichtung an dem Antriebsteil zu befestigen, um durch eine gefederte und gedämpfte Aufhängung der Fahrerstandplattform am Antriebsteil die auf die Bedienperson, die auf der Fahrerstandplattform steht, einwirkenden Schwingungen und Vibrationen im Betrieb des Flurförderzeugs mittels der Feder-Dämpfereinrichtung zu reduzieren, beispielsweise wenn mit dem Flurförderzeug über Bodenunebenheiten gefahren wird. Weiterhin ist gewünscht, dass die Feder-Dämpfereinrichtung aufgrund ihres Bauraumbedarfs den Fahrerraum, insbesondere den Raum für die Füße der Bedienperson, auf der Fahrerstandplattform möglichst wenig einschränkt. Zudem ist gewünscht, dass die gefederte und gedämpfte Fahrerstandplattform aufgrund ihres Bauraumbedarfs möglichst zu keiner wesentlichen Erhöhung der Einstiegshöhe des Flurförderzeugs, d.h. der Höhe der Fahrerstandplattform über der Fahrbahn, führt, da bei Flurförderzeugen, die von der Bedienperson im Stehen bedient werden, die Bedienperson oftmals im Betrieb des Flurförderzeugs, beispielswiese für Kommissioniertätigkeiten, auf die Fahrerstandplattform aufsteigen und absteigen und somit die eine Stufe bildende Einstiegshöhe überwinden muss.

Der vorliegenden Erfindung liegt die Aufgabe zugrunde, ein Flurförderzeug der eingangs genannten Gattung zur Verfügung zu stellen, das eine gefederte und gedämpfte Fahrerstandplattform bei geringem Bauraumbedarf aufweist.

Diese Aufgabe wird erfindungsgemäß dadurch gelöst, dass das mindestens eine Federelement der Feder-Dämpfereinrichtung in vertikaler Richtung oberhalb der Fahrerstandplattform angeordnet ist und eine horizontale, in Fahrzeuglängsrichtung ausgerichtete Betätigungsrichtung aufweist. Die bewegliche Aufhängung der Fahrerstandplattform mittels einer Parallelogrammaufhängung, die zu einer reinen vertikalen Bewegung bzw. im Wesentlichen vertikalen der Fahrerstandplattform führt, und die Abstützung der in vertikaler Richtung beweglichen Fahrerstandplattform mittels einer Feder-Dämpfereinrichtung an dem Antriebsteil ermöglicht es, eine gefederte und gedämpfte Aufhängung der Fahrerstandplattform an dem Antriebsteil zur Verfügung zu stellen, die einen geringen Bauraumbedarf aufweist und nur zu geringen Beschränkungen des Fahrerraumes, insbesondere des Raumes für die Füße der Bedienperson, auf der Fahrerstandplattform führt und zu keiner wesentlichen Erhöhung der Einstiegshöhe des Flurförderzeugs, d.h. der Höhe der Fahrerstandplattform über der Fahrbahn, führt. Erfindungsgemäß ist das mindestens eine Federelement der Feder-Dämpfereinrichtung in vertikaler Richtung oberhalb der Fahrerstandplattform angeordnet ist und eine horizontale, in Fahrzeuglängsrichtung ausgerichtete Betätigungsrichtung aufweist. Dadurch wird erzielt, dass das Federelement der Feder-Dämpfereinrichtung zu keiner Erhöhung der Einstiegshöhe des Flurförderzeugs führt. Zudem führt diese Anordnung des Federelements der Feder-Dämpfereinrichtung in vertikaler Richtung mit Abstand oberhalb der Fahrerstandplattform nur zu geringen Beschränkungen des Fahrerraumes, insbesondere des Raumes für die Füße der Bedienperson, auf der Fahrerstandplattform.

Gemäß einer vorteilhaften Ausgestaltungsform der Erfindung weist die Parallelogrammaufhängung einen ersten Lenker auf, der an einer ersten Gelenkverbindung an dem Antriebsteil und an einer zweiten Gelenkverbindung an der Fahrerstandplattform angelenkt ist, und einen zweiten Lenker auf, der an einer dritten Gelenkverbindung an dem Antriebsteil und an einer vierten Gelenkverbindung an der Fahrerstandplattform angelenkt ist, wobei die erste Gelenkverbindung und die dritte Gelenkverbindung an dem Antriebsteil um einen horizontalen Abstand und einen vertikalen Abstand voneinander beabstandet angeordnet sind und wobei die zweite Gelenkverbindung und die vierte Gelenkverbindung an der Fahrerstandplattform um im Wesentlichen denselben horizontalen Abstand und im Wesentlichen denselben vertikalen Abstand voneinander beabstandet angeordnet sind. Mit einer derartigen Parallelogrammaufhängung mit zwei Lenkern kann bei geringem Bauraumbedarf eine Aufhängung der Fahrerstandplattform erzielt werden, die eine reine vertikale bzw. im Wesentlichen vertikale Bewegung der Fahrerstandplattform ermöglicht, so dass die Fahrerstandplattform über den gesamten Hubbereich stets horizontal ausgerichtet ist, was zu einem hohen Komfort für die auf der Fahrerstandplattform stehende Bedienperson führt.

Gemäß einer vorteilhaften Ausführungsform der Erfindung sind die zweite Gelenkverbindung und die vierte Gelenkverbindung an der Unterseite der Fahrerstandplattform angeordnet. Dies ermöglicht eine bauraumsparende Anordnung der beiden Lenker unterhalb der Fahrerstandplattform für eine bauraumsparende Ausführung der Parallelogrammaufhängung.

Vorteilhafterweise ist das mindestens eine Federelement angrenzend an das Batteriefach angeordnet. Das mindestens eine Federelement befindet sich somit in Fahrzeuglängsrichtung gesehen an der Vorderseite der Fahrerstandplattform, so dass die Anordnung des Federelements der Feder-Dämpfereinrichtung insgesamt nur zu geringen Beschränkungen des Fahrerraumes, insbesondere des Raumes für die Füße der Bedienperson, auf der Fahrerstandplattform führt.

Das mindestens eine Federelement ist vorteilhafterweise von einem der beiden Lenker, insbesondere dem ersten Lenker, betätigbar, und der Lenker ist als Winkelhebel ausgebildet. Das in vertikaler Richtung oberhalb der Fahrerstandplattform angeordnete und eine horizontale, in Fahrzeuglängsrichtung ausgerichtete Betätigungsrichtung aufweisende Federelement kann mit einem als Winkelhebel ausgebildeten Lenker der Parallelogrammaufhängung auf einfache Weise betätigt werden, um eine gefederte Aufhängung der Fahrerstandplattform zu erzielen.

Gemäß einer vorteilhaften Ausgestaltungsform der Erfindung ist der erste Lenker von zwei in Fahrzeugquerrichtung beabstandet angeordneten Lenkerelementen gebildet, die mit einer Querplatte verbunden sind, mittels der das mindestens eine Federelement betätigbar ist. Hierdurch kann das Federelement auf einfache Weise betätigt werden und die Fahrerstandplattform kann aufgrund der Verbindung mit den beiden Lenkerelementen nicht seitlich kippen.

Hinsichtlich eines geringen Bauraumbedarfs und einer kompakten Ausführung der Parallelogrammaufhängung in vertikaler Richtung ergeben sich Vorteile, wenn gemäß einer Weiterbildung der Erfindung der zweite Lenker zwischen den beiden Lenkerelementen angeordnet ist.

Das Dämpferelement kann gemäß einer Ausgestaltungsform der Erfindung mit einem der beiden Lenker, insbesondere dem zweiten Lenker, oder der Fahrerstandplattform verbunden sein. Der Dämpfungseffekt des Dämpferelements muss hierbei höher sein, wenn das Dämpferelement mit dem sich langsamer bewegenden Element (Lenker bzw. Fahrerstandplattform) verbunden ist bzw. kann kleiner sein, wenn das Dämpferelement mit dem sich schneller bewegenden Element (Lenker bzw. Fahrerstandplattform) verbunden ist.

Vorteilhafterweise ist das Dämpferelement an der Fahrerstandplattform in Fahrzeuglängsrichtung gegenüberliegend zu dem mindestens einen Federelement angeordnet. Das Dämpferelement befindet sich somit in Fahrzeuglängsrichtung gesehen an der Rückseite der Fahrerstandplattform, so dass die Anordnung des Dämpferelements der Feder-Dämpfereinrichtung nur zu geringen Beschränkungen des Fahrerraumes, insbesondere des Raumes für die Füße der Bedienperson, auf der Fahrerstandplattform führt.

Das Dämpferelement ist hierbei vorteilhafterweise angrenzend an die vertikale Rückwand des Antriebsteils angeordnet und an der vertikalen Rückwand des Antriebsteils befestigt, was sich weiter günstig auf geringen Beschränkungen des Fahrerraumes, insbesondere des Raumes für die Füße der Bedienperson, auf der Fahrerstandplattform auswirkt.

Gemäß einer Weiterbildung der Erfindung weist das Feder-Dämpferelement zwei Federelemente auf, die parallel wirkend angeordnet sind.

Gemäß einer vorteilhaften Ausführungsform der Erfindung steht im Ausgangszustand bei unbelasteter Fahrerstandplattform der die Federelemente betätigende Lenker, insbesondere der erste Lenker, nur mit dem zweiten Federelement in Wirkverbindung und ist zwischen dem Lenker und dem ersten Federelement ein Freihubbereich ausgebildet, in dem das erste Federelement nicht betätigt ist, wobei ein Anwesenheitssensor vorgesehen ist, der eine auf der Fahrerstandplattform befindliche Bedienperson erfasst, wobei der Anwesenheitssensor von einem der beiden Lenker, insbesondere dem ersten Lenker, in dem Freihubbereich betätigbar ist. Der Freihubbereich stellt somit den anfänglichen Hubbereich dar, der durchlaufen wird, wenn eine Bedienperson die Fahrerstandplattform betritt. In diesem Freihubbereich wird nur das zweite Federelement betätigt. Sofern der Anwesenheitssensor in dem Freihubbereich betätigt wird, um eine auf der Fahrerstandplattform befindliche Bedienperson zu detektieren, kann der Anwesenheitssensor sicher beim Aufsteigen der Bedienperson auf die Fahrerstandplattform betätigt und aktiviert werden, auch wenn das erste Federelement eine entsprechend hohe Steifigkeit aufweist. Durch entsprechende Auslegung der Steifigkeit des zweiten Federelements kann der Anwesenheitssensor auch sicher beim Absteigen der Bedienperson von der Fahrerstandplattform betätigt und deaktiviert werden, um keine auf der Fahrerstandplattform befindliche Bedienperson zu detektieren, wenn das erste Federelement eine entsprechend geringe Steifigkeit aufweist, da das zweite Federelement bei entsprechender Steifigkeit allein die Fahrerstandplattform über den Freihubbereich in den Ausgangszustand betätigen kann.

Um den Freihubbereich zu erzielen, in dem das erste Federelement nicht betätigt wird, steht vorteilhafterweise das erste Federelement mit einer Begrenzungseinrichtung in Wirkverbindung, die die Entspannung des ersten Federelements begrenzt.

Gemäß einer vorteilhaften Ausführungsform der Erfindung ist ein Trägerbauteil vorgesehen, an dem die erste Gelenkverbindung und die dritte Gelenkverbindung ausgebildet sind und an der das mindestens eine Federelement angeordnet ist, wobei das Trägerbauteil eine Befestigungsschnittstelle aufweist, mit der das Trägerbauteil an dem Antriebsteil befestigbar ist. Die gefederte und gedämpfte Fahrerstandplattform kann somit als eine vormontierte Baugruppe ausgebildet werden, die mittels der Befestigungsschnittstelle des Trägerbauteils auf einfache Weise an dem Antriebsteil des Flurförderzeugs befestigt werden kann. Hierdurch wird weiterhin eine modulare Bauweise ermöglicht, die es ermöglicht, die gefederte und gedämpfte Fahrerstandplattform in Flurförderzeugen mit unterschiedlichen Fahrerarbeitsplätzen, beispielsweise einem am Antriebsteil anhebbar angeordneten Fahrerarbeitsplatz oder einem nicht-anhebbaren Fahrerarbeitsplatz, einzubauen und/oder die gefederte und gedämpfte Fahrerstandplattform in einem Flurförderzeug einzubauen, um Varianten von Flurförderzeugen mit fester, ungefederter Fahrerstandplattform und gefederter, gedämpfter Fahrerstandplattform herzustellen.

Das erste Federelement ist gemäß einer vorteilhaften Ausgestaltungsform der Erfindung als Luftfeder ausgebildet. Alternativ kann das erste Federelement als Elastomerfeder, Magnetfeder, Drehstabfeder oder Schraubendruckfeder ausgebildet sein.

Das erste Federelement ist gemäß einer vorteilhaften Weiterbildung der Erfindung zur Anpassung an das Körpergewicht der Bedienperson in der Federsteifigkeit einstellbar. Diese Einstellbarkeit der Steifigkeit des ersten Federelements kann manuell von der Bedienperson vorgenommen werden. Es ist auch möglich, die Steifigkeit des ersten Federelements automatisch einzustellen und die Steifigkeit mittels einer geeigneten Vorrichtung automatisch zu regeln, so dass die Federsteifigkeit der gefederten Fahrerstandplattform automatisch angepasst werden kann. Bei einer Luftfeder kann die Steifigkeit auf einfache Weise durch Verändern des Luftdruckes erzielt werden.

Das zweite Federelement ist gemäß einer vorteilhaften Ausgestaltungsform der Erfindung als Spiraldruckfeder ausgebildet. Alternativ kann das zweite Federelement als Elastomerfeder, Magnetfeder oder Drehstabfeder ausgebildet sein.

Das Dämpferelement ist gemäß einer vorteilhaften Ausgestaltungsform der Erfindung als hydraulischer Dämpfer ausgebildet. Alternativ kann das Dämpferelement als Dämpferelement ausgebildet sein, das statische bzw. dynamische Reibung oder Drehreibung nutzt.

Weitere Vorteile und Einzelheiten der Erfindung werden anhand des in den schematischen Figuren dargestellten Ausführungsbeispiels näher erläutert. Hierbei zeigt
- Figur 1: ein Flurförderzeug mit einer erfindungsgemäßen Fahrerstandplattform in einer perspektivischen Darstellung,
- Figur 2: einen Ausschnitt der Figur 1 in einer perspektivischen Darstellung,
- Figur 3: eine Seitenansicht der Figur 2,
- Figur 4: die erfindungsgemäße Fahrerstandplattform in einer perspektivischen Darstellung,
- Figur 5: eine Seitenansicht der Figur 4,
- Figur 6: die Bauteile der erfindungsgemäße Fahrerstandplattform in einer Explosionsdarstellung,
- Figur 7: eine Darstellung gemäß der Figur 3 mit zusätzlichen Abdeckungen und
- Figur 8: einen Schnitt entlang der Linie A-A der Figur 5.

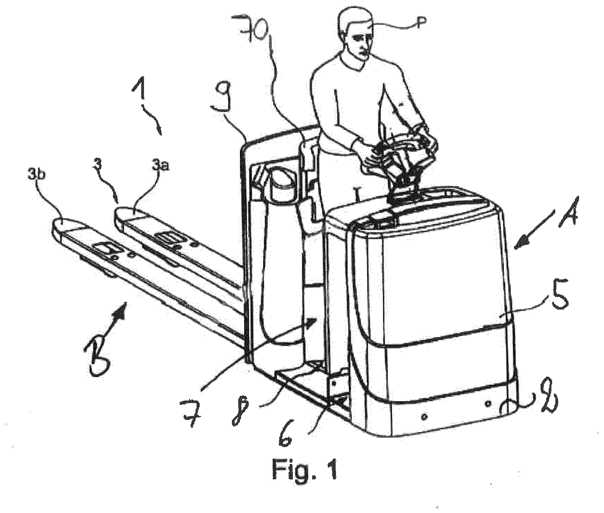

Die Figur 1 zeigt ein erfindungsgemäßes Flurförderzeug 1. Das Flurförderzeug 1 ist im dargestellten Ausführungsbeispiel als Kommissionierer oder Hubwagen ausgebildet.

Das Flurförderzeug 1 weist einen Antriebsteil A und einen relativ zum Antriebsteil A anhebbaren bzw. absenkbaren Lastteil B auf. Der Antriebsteil A weist als tragendes Bauteil einen Rahmen 2 auf. Der Lastteil B weist als tragendes Bauteil einen von zwei Lastgabeln 3a, 3b gebildeten Lastrahmen 3 auf. Die beiden Lastgabeln 3a, 3b sind in Fahrzeugquerrichtung voneinander beabstandet und mittels eines Hubantriebs relativ zu dem Antriebsteil A anhebbar und absenkbar.

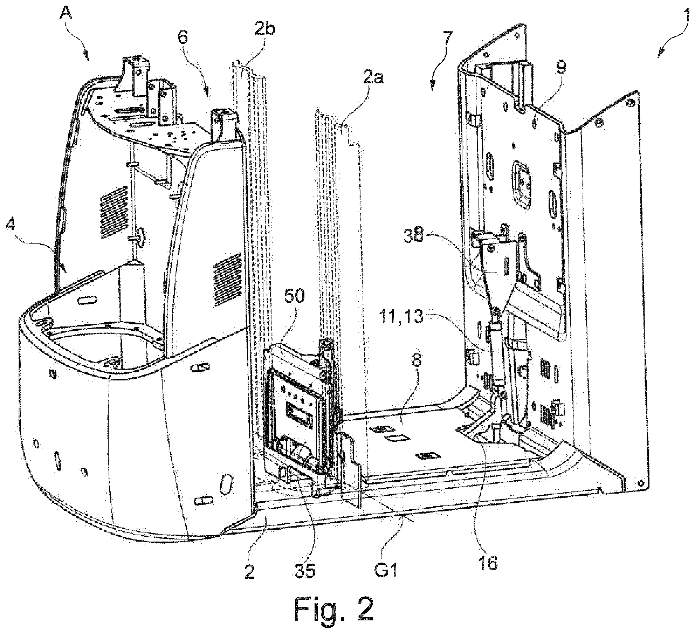

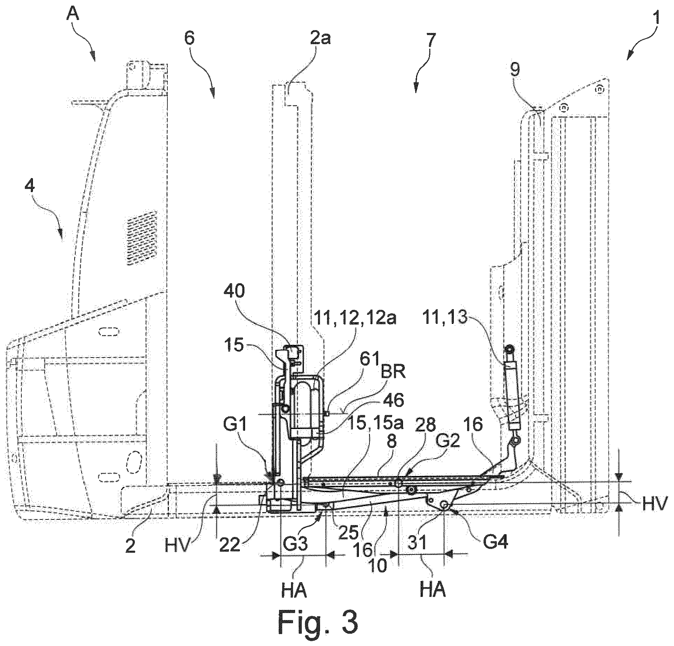

In den Figuren 2 und 3 ist der Antriebsteil A des erfindungsgemäßen Flurförderzeugs 1 näher dargestellt.

An dem vorderen Bereich des Antriebsteils A ist unter einer Haube 5 ein Aggregateraum 4 ausgebildet, in dem ein elektrisch angetriebenes und lenkbares Antriebsrad angeordnet ist, mit dem sich der Antriebsteil A auf einer Fahrbahn abstützt. Unter der Haube 5 sind in dem Aggregateraum weitere Aggregate angeordnet, beispielsweise eine Leistungselektronikeinheit und ein elektrischer Hubmotor zum Antrieb einer Hydraulikpumpe, mittels der eine Hubvorrichtung zum Anheben und Absenken des Lastrahmens 3 relativ zum Rahmen 2 versorgbar ist.

In Längsrichtung des Flurförderzeugs 1 benachbart zum Aggregateraum 4 ist am Antriebsteil A ein Batteriefach 6 zur Aufnahme einer Traktionsbatterie ausgebildet, der ein elektrisches Antriebssystem des Flurförderzeugs 1 mit elektrischer Energie versorgt.

In Längsrichtung des Flurförderzeugs 1 benachbart zum Batteriefach 6 ist am Antriebsteil A ein Fahrerarbeitsplatz 7 ausgebildet, der von einer Fahrerstandplattform 8 für eine stehende Bedienperson P ausgebildet ist, auf der die Bedienperson P steht.

Am hinteren Bereich des Antriebsteil A ist in Längsrichtung des Flurförderzeugs 1 benachbart zu dem Fahrerarbeitsplatz 7 eine vertikale Rückwand 9 angeordnet, an der der anhebbare und absenkbare Lastrahmen 3 vertikal geführt ist. An der vertikalen Rückwand 9 kann eine Anlehnhilfe 70 für die stehende Bedienperson P angeordnet sein.

An dem Antriebsteil A des Flurförderzeugs 1 ist somit der von der Fahrerstandplattform 8 gebildete Fahrerarbeitsplatz 7 in Längsrichtung des Flurförderzeugs 1 zwischen dem Batteriefach 6 der Traktionsbatterie und der vertikalen Rückwand 9 des Antriebsteils A angeordnet.

Erfindungsgemäß ist die Fahrerstandplattform 8 als gefederte und gedämpfte Fahrerstandplattform 8 ausgebildet, deren Aufbau in Verbindung mit den Figuren 2 bis 8 näher beschrieben wird.

Die Fahrerstandplattform 8 ist erfindungsgemäß mittels einer Parallelogrammaufhängung 10 an dem Antriebsteil A in vertikaler Richtung V bewegbar aufgehängt. Weiterhin ist die Fahrerstandplattform 8 mittels einer Feder-Dämpfereinrichtung 11, die mindestens ein Federelement 12 und ein Dämpferelement 13 umfasst, an dem Antriebsteil A abgestützt.

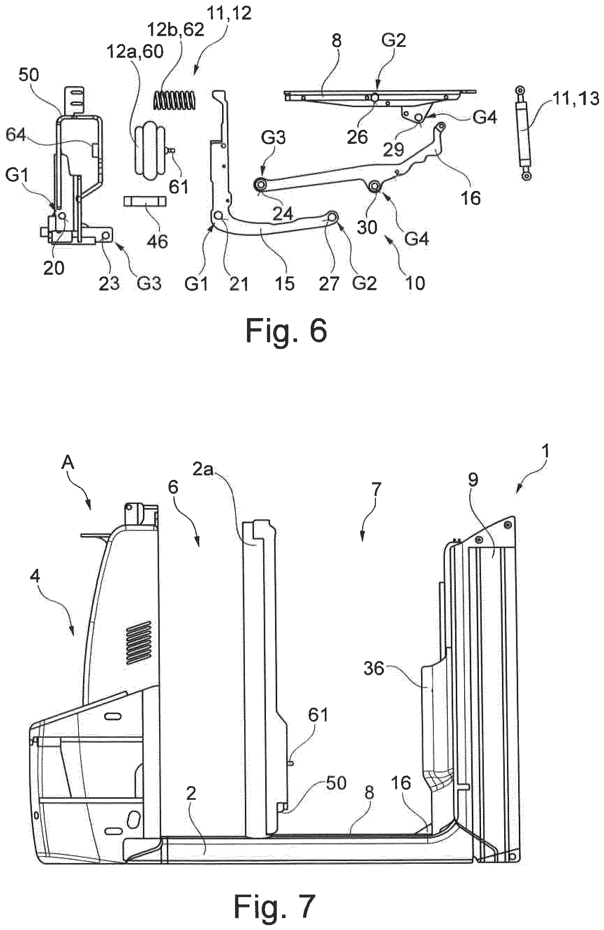

Die Parallelogrammaufhängung 10 weist, wie in der Figur 6 näher dargestellt ist, einen ersten Lenker 15 auf, der an einer ersten Gelenkverbindung G1 an dem Antriebsteil A und an einer zweiten Gelenkverbindung G2 an der Fahrerstandplattform 8 gelenkig angelenkt ist, und einen zweiten Lenker 16 auf, der an einer dritten Gelenkverbindung G3 an dem Antriebsteil A und an einer vierten Gelenkverbindung G4 an der Fahrerstandplattform 8 gelenkig angelenkt ist. Die erste Gelenkverbindung G1 und die dritte Gelenkverbindung G3 sind an dem Antriebsteil A - wie in der Figur 3 näher verdeutlicht ist - um einen horizontalen Abstand HA und einen vertikalen Abstand HV voneinander beabstandet angeordnet. Die zweite Gelenkverbindung G2 und die vierte Gelenkverbindung G4 an der Fahrerstandplattform 8 weisen im Wesentlichen denselben horizontalen Abstand HA und im Wesentlichen denselben vertikalen Abstand HV voneinander auf. Der horizontale Abstand HA an den Gelenkverbindungen G1 und G3 kann hierbei gleich dem horizontalen Abstand HA an den Gelenkverbindungen G2 und G4 sein sowie der vertikale Abstand HV an den Gelenkverbindungen G1 und G3 kann hierbei gleich dem vertikalen Abstand HV an den Gelenkverbindungen G2 und G4 sein, so dass eine reine vertikale Bewegung der Fahrerstandplattform 8 erzielt wird. Es versteht sich jedoch, dass der horizontale Abstand HA an den Gelenkverbindungen G1 und G3 auch unterschiedlich dem horizontalen Abstand HA an den Gelenkverbindungen G2 und G4 sein kann sowie der vertikale Abstand HV an den Gelenkverbindungen G1 und G3 unterschiedlich dem vertikalen Abstand HV an den Gelenkverbindungen G2 und G4 sein kann, so dass eine vertikale Bewegung der Fahrerstandplattform 8 mit einer leichten Rotation der Fahrerstandplattform 8 (Roto-Translation) erzielt wird.

Die Gelenkverbindungen G1-G4 weisen jeweils ein in Fahrzeugquerrichtung verlaufende Drehachse auf. Die erste Gelenkverbindung G1 ist von einer Bohrung 20 am Antriebsteil A und einer Bohrung 21 in dem ersten Lenker 15 gebildet, durch die ein Bolzen 22 geführt ist. Die dritte Gelenkverbindung G3 ist von einer Bohrung 23 am Antriebsteil A und einer Bohrung 24 in dem zweiten Lenker 16 gebildet, durch die ein Bolzen 25 geführt ist. Die zweite Gelenkverbindung G2 ist von einer Bohrung 26 an der Fahrerstandplattform 8 und einer Bohrung 27 in dem ersten Lenker 15 gebildet, durch die ein Bolzen 28 geführt ist. Die vierte Gelenkverbindung G4 ist von einer Bohrung 29 an der Fahrerstandplattform 8 und einer Bohrung 30 in dem zweiten Lenker 16 gebildet, durch die ein Bolzen 31 geführt ist.

Die zweite Gelenkverbindung G2 und die vierte Gelenkverbindung G4 sind hierbei an der Unterseite der Fahrerstandplattform 8 angeordnet, wie aus den Figuren 3, 5 und 6 ersichtlich ist.

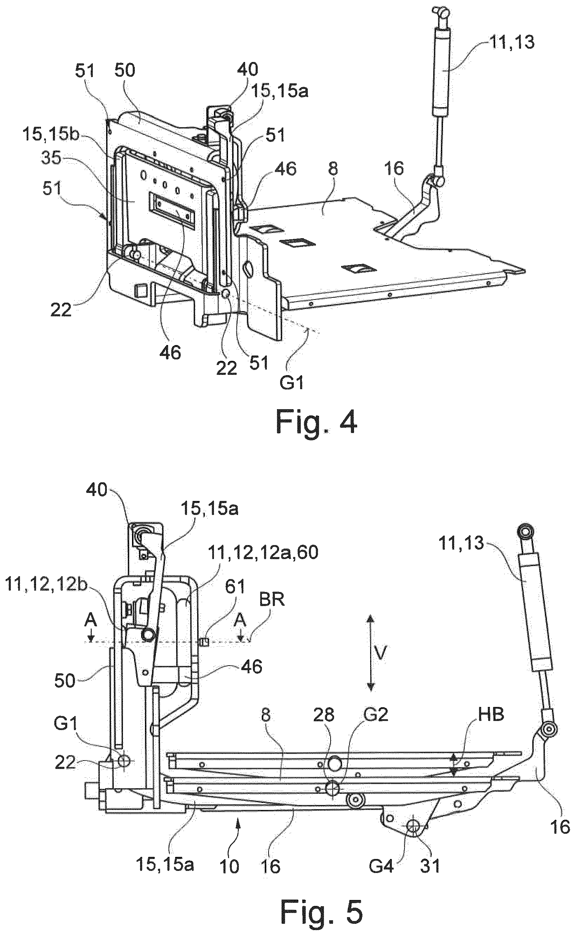

Das mindestens eine Federelement 12 der Feder-Dämpfereinrichtung 11 ist - wie die Figuren 3 und 5 zeigen - in vertikaler Richtung V oberhalb der Fahrerstandplattform 8 angeordnet und weist eine horizontale, in Fahrzeuglängsrichtung ausgerichtete Betätigungsrichtung BR auf. Das mindestens eine Federelement 12 ist hierbei angrenzend an das Batteriefach 6 angeordnet. Das mindestens eine Federelement 12 ist weiterhin in vertikaler Richtung V mit Abstand oberhalb der Fahrerstandplattform 8 angeordnet. Das mindestens eine Federelement 12 ist somit an der Vorderseite der Fahrerstandplattform 8 angeordnet und weist eine horizontale, in Fahrzeuglängsrichtung ausgerichtete Betätigungsrichtung BR auf. Diese Anordnung des mindestens einen Federelements 12 der Feder-Dämpfereinrichtung 11 führt - wie in den Figuren 3, 5 und 7 ersichtlich ist - dazu, dass das mindestens eine Federelement 12 zu keiner Verringerung des Raumes für die Füße der Bedienperson P führt, mit denen die Bedienperson auf der Fahrerstandplattform 8 steht.

Das mindestens eine Federelement 12 ist von einem der beiden Lenker 15, 16, im dargestellten Ausführungsbeispiel dem ersten Lenker 15, betätigbar, der hierzu als Winkelhebel ausgebildet ist. Der Lenker 15 weist einen im Wesentlichen horizontal ausgerichteten Abschnitt auf, an dem die Gelenkverbindung G2 ausgebildet ist und einen im Wesentlichen vertikal ausgerichteten Abschnitt auf, der mit dem mindestens einen Federelement 12 zu dessen Betätigung in Wirkverbindung steht.

Der erste Lenker 15 ist im dargestellten Ausführungsbeispiel von zwei in Fahrzeugquerrichtung beabstandet angeordneten Lenkerelementen 15a, 15b gebildet, die mit einer Querplatte 35 verbunden sind, mittels der das mindestens eine Federelement 12 betätigbar ist, wie aus der Figur 4 ersichtlich ist.

Der zweite Lenker 16 ist - in Fahrzeugquerrichtung gesehen - zwischen den beiden Lenkerelementen 15a, 15b angeordnet. Dies ermöglicht es, den Lenker 16 und die horizontalen Abschnitte der Lenkerelemente 15a, 15b derart anzuordnen, dass der Lenker 16 und die horizontalen Abschnitte der Lenkerelemente 15a, 15b in vertikaler Richtung teilweise denselben Einbauraum nutzen, so dass die Lenker 15, 16 in vertikaler Richtung einen geringen Einbauraum unter der Fahrerstandplattform 8 aufweisen.

Das Dämpferelement 13 der Feder-Dämpfereinrichtung 11 ist mit einem der beiden Lenker 15, 16, im dargestellten Ausführungsbeispiel dem zweiten Lenker 16, verbunden. Alternativ kann das Dämpferelement 13 der Feder-Dämpfereinrichtung 11 mit der Fahrerstandplattform 8 verbunden sein.

Das Dämpferelement 13 ist an der Fahrerstandplattform 8 in Fahrzeuglängsrichtung gegenüberliegend zu dem mindestens einen Federelement 12 angeordnet. Das Dämpferelement 13 ist angrenzend an die vertikale Rückwand 9 des Antriebsteils A angeordnet und an der vertikalen Rückwand 9 des Antriebsteils A befestigt.

Der Lenker 16 ist für die Verbindung mit dem Dämpferelement 13 über die vierte Gelenkverbindung G4 hinaus verlängert. Die vertikale Rückwand 9 ist zur Befestigung des Dämpferelements 13 mit einer Befestigungskonsole 38 versehen (Figur 2). Das Dämpferelement 13 kann hierdurch vollständig unter einer Abdeckung 36 (Figur 7) angeordnet werden, die an der Rückwand 9 befestigt ist.

Das Dämpferelement 13 befindet sich somit in Fahrzeuglängsrichtung gesehen an der Rückseite der Fahrerstandplattform 8, wodurch die Anordnung des Dämpferelements 13 der Feder-Dämpfereinrichtung 11 nur zu geringen Beschränkungen des Fahrerraumes auf der Fahrerstandplattform 8 führt.

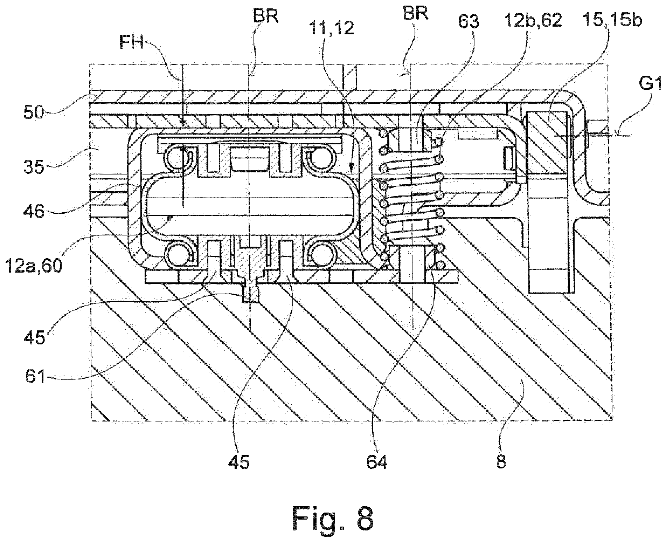

Bei der erfindungsgemäßen Fahrerstandplattform 8 weist das Feder-Dämpferelement zwei Federelemente 12a, 12b auf, die - wie aus den Figuren 6 und 8 ersichtlich ist - parallel wirkend angeordnet sind.

Weiterhin ist ein Anwesenheitssensor 40 vorgesehen, der eine auf der Fahrerstandplattform 8 befindliche Bedienperson P erfasst. Der Anwesenheitssensor 40 ist im dargestellten Ausführungsbeispiel von dem ersten Lenker 15 betätigbar.

Die Figur 8 zeigt einen horizontalen Schnitt durch die Federelemente 12a, 12b in einem Ausgangszustand bei unbelasteter Fahrerstandplattform 8.

Im Ausgangszustand bei unbelasteter Fahrerstandplattform 8 steht der die Federelemente 12a, 12b betätigende Lenker 15 mittels der Querplatte 35 nur mit dem zweiten Federelement 12b in Wirkverbindung und zwischen der Querplatte 35 und dem ersten Federelement 12a ist ein Freihubbereich FH ausgebildet, in dem das erste Federelement 12a nicht betätigt wird.

Das erste Federelement 12a ist hierzu an dem Antriebsteil A befestigt, beispielsweise mittels Befestigungsschrauben 45, und das erste Federelement 12a steht mit einer Begrenzungseinrichtung 46 in Wirkverbindung, die die Entspannung des ersten Federelements 12a derart begrenzt, dass im Ausgangszustand zwischen dem ersten Federelement 12a und der Querplatte 35 ein Luftspalt vorhanden ist, der den Freihubbereich FH bildet. Die Begrenzungseinrichtung 46 ist im dargestellten Ausführungsbeispiel - wie aus der Figur 8 ersichtlich ist - als bügelförmiger Halter ausgebildet, der an dem Antriebsteil A befestigt ist und der das erste Federelement 12a in Draufsicht umgreift. Im Ausgangszustand liegt das erste Federelement 12a an dem bügelförmigen Halter an, so dass der bügelförmige Halter die Entspannung des ersten Federelements 12a begrenzt.

Das zweite Federelement 12b ist - wie aus der Figur 8 ersichtlich ist - im Ausgangszustand zwischen dem Antriebsteil A und der Querplatte 35 eingespannt.

Der Anwesenheitssensor 40 wird hierbei von dem ersten Lenker 15 bei dessen Bewegung in dem Freihubbereich FH betätigt.

Im dargestellten Ausführungsbeispiel ist ein Trägerbauteil 50 vorgesehen, an dem die erste Gelenkverbindung G1 und die dritte Gelenkverbindung G3 ausgebildet sind und an dem die beiden Federelemente 12a, 12b sowie die Begrenzungseinrichtung 46 angeordnet und befestigt sind. An dem Trägerbauteil 50 ist weiterhin der Anwesenheitssensor 40 angeordnet und befestigt. Das Trägerbauteil 50 weist eine Befestigungsschnittstelle 51 auf, mittels der das Trägerbauteil 50 an dem Antriebsteil A befestigbar ist. Im dargestellten Ausführungsbeispiel ist das Trägerbauteil 50 - wie aus der Figur 2 ersichtlich ist - mit der Befestigungsschnittstelle 51 an zwei vertikal angeordneten Säulen 2a, 2b des Rahmens 2 befestigt, die voneinander in Fahrzeugquerrichtung beabstandet sind und in Fahrzeuglängsrichtung zwischen dem Batteriefach 6 und dem Fahrerarbeitsplatz 7 angeordnet sind. Im dargestellten Ausführungsbeispiel ist die Befestigungsschnittstelle 51 von mehreren Bohrungen für Schraubverbindungen gebildet, mit denen das an den Säulen 2a, 2b befestigt werden kann, wie aus den Figuren 2 und 4 ersichtlich ist.

Im dargestellten Ausführungsbeispiel ist das erste Federelement 12a als Luftfeder 60, beispielsweise Luftbalgfeder, ausgebildet.

Das erste Federelement 12a kann weiterhin zur Anpassung an das Körpergewicht der Bedienperson in der Federsteifigkeit einstellbar sein. Die Luftfeder 60 ist hierzu mit einem Anschluss 61 versehen, der eine Veränderung des Luftdruckes im Inneren der Luftfeder 60 ermöglicht.

Das zweite Federelement 12b ist im dargestellten Ausführungsbeispiel als Spiraldruckfeder 62 ausgebildet ist. Die Spiraldruckfeder 62 ist auf einem Zapfen 64 des Trägerbauteils 50 und einem Zapfen 63 der Querplatte 35 angeordnet.

Das Dämpferelement 13 ist im dargestellten Ausführungsbeispiel als hydraulischer Dämpfer ausgebildet.

Das erfindungsgemäße Flurförderzeug 1 weist eine Reihe von Vorteilen auf.

Mit der erfindungsgemäßen Parallelogrammaufhängung 10 in Verbindung mit der Feder-Dämpfereinrichtung 11 können die Vibrationen und Schwingungen reduziert werden, die auf die auf der Fahrerstandplattform 8 stehende Bedienperson P einwirken, beispielswiese im Betrieb des Flurförderzeugs 1 auf unebenen Fahrbahnoberflächen.

Die Parallelogrammaufhängung 10 der Fahrerstandplattform 8 mit den Lenkern 15, 16 ermöglicht - wie in der Figur 5 veranschaulicht ist, in der die Fahrerstandplattform 8 in der oberen Endstellung und in der unteren Endstellung dargestellt ist - eine reine vertikale Bewegung bzw. im Wesentlichen vertikale der Fahrerstandplattform 8 über den gesamten Hubbereich HB, wobei die Fahrerstandplattform 8 über den gesamten Hubbereich HB stets im Wesentlichen horizontal ausgerichtet ist, was zu einem hohen Komfort für die auf der Fahrerstandplattform 8 stehende Bedienperson P führt.

Die Parallelogrammaufhängung 10 der Fahrerstandplattform 8 mit den Lenkern 15, 16 weist einen geringen Bauraumbedarf in vertikaler Richtung unterhalb der Fahrerstandplattform 8 auf. In Verbindung mit der Anordnung des mindestens einen Federelements 12 sowie des Dämpferelements 13 der Feder-Dämpfereinrichtung 11 wird somit erzielt, dass das erfindungsgemäße Flurförderzeug 1 eine Einstiegshöhe auf die Fahrerstandplattform 8 aufweist, die gegenüber einem Flurförderzeug mit einer ungefederten Fahrerstandplattform kaum erhöht ist.

Die Parallelogrammaufhängung 10 der Fahrerstandplattform 8 in Verbindung mit der Anordnung des mindestens einen Federelements 12 sowie des Dämpferelements 13 der Feder-Dämpfereinrichtung 11 führt auch zu kaum einer Verringerung des Fahrerraumes, insbesondere des Raumes für die Füße der Bedienperson, auf der Fahrerstandplattform. Die Parallelogrammaufhängung 10 der Fahrerstandplattform 8 in Verbindung mit der Anordnung des mindestens einen Federelements 12 sowie des Dämpferelements 13 der Feder-Dämpfereinrichtung 11 ist auf eine bauraumsparende Ausführung der gefederten und gedämpften Fahrerstandplattform 8 optimiert, so dass ein geringer Einbauraumbedarf für die Parallelogrammaufhängung 10, das Federelement 12 sowie das Dämpferelement 13 erzielt wird.

Die Steifigkeit des ersten Federelements 12 kann, insbesondere bei der Ausführung des Federelements 12a als Luftfeder 60, auf einfache Weise an das Körpergewicht der Bedienperson P und/oder an die Beschaffenheit der Fahrbahnoberfläche angepasst werden.

Die Ausbildung mit zwei Federelementen 12a, 12b und des Freihubbereichs FB an dem ersten Federelement 12a ermöglicht es weiterhin, den Anwesenheitssensor 40 sicher zu betätigen. Im Freihubbereich FB wird nur das zweite Federelement 12b betätigt und komprimiert. Beim Aufsteigen der Bedienperson P auf die Fahrerstandplattform 8 kann somit der Anwesenheitssensor 40 im Freihubbereich FH sicher betätigt werden, um eine auf der Fahrerstandplattform 8 stehende Bedienperson P zu detektieren, auch wenn das erste Federelement 12a eine entsprechend hohe Steifigkeit aufweist. Durch entsprechende Auslegung der Steifigkeit des zweiten Federelements 12b kann der Anwesenheitssensor 40 auch sicher beim Absteigen der Bedienperson P von der Fahrerstandplattform 8 im Freihubbereich FH betätigt werden, um keine auf der Fahrerstandplattform 8 befindliche Bedienperson P zu detektieren, wenn das erste Federelement 12a eine entsprechend geringe Steifigkeit aufweist, sofern das zweite Federelement 12b bei entsprechender Steifigkeit allein die Fahrerstandplattform 8 über den Freihubbereich FH in den Ausgangszustand betätigen kann. Dadurch kann der Anwesenheitssensor 40 bei geringem Bauaufwand und einfachem Aufbau der gefederten und gedämpften Fahrerstandplattform 8 betätigt werden, insbesondere bei einer Ausführung bei der die Steifigkeit des ersten Federelements 12a einstellbar ist. Für die Erzeugung des Freihubbereichs FB für die sichere Betätigung des Anwesenheitssensors 40 sind nur das zweite Federelement 12b und die Begrenzungseinrichtung 46 an dem ersten Federelement 12a als zusätzliche Bauelemente erforderlich.

Der Anbau der Lenker 15, 16 mit der Fahrerstandplattform 8 und der Feder-Dämpfereinrichtung 11 an dem Trägerbauteil 50 ermöglicht die Ausführung der gefederten und gedämpften Fahrerstandplattform 8 als vormontierte Baugruppe, die auf einfache Weise mittels der Befestigungsschnittstelle 51 in das Flurförderzeug 1 eingebaut werden kann. Zudem ist hiermit die gefederte und gedämpfte Fahrerstandplattform 8 modular mit Flurförderzeugen 1 mit verschiedenen Arten von Fahrerarbeitsplätzen 7 und kann in Flurförderzeugen 1 mit einem nicht-anhebbaren Fahrerarbeitsplatz 7 und einem Flurförderzeug 1 mit einem anhebbaren Fahrerarbeitsplatz 7 eingebaut werden.

## Patentansprüche

1. Flurförderzeug (1) mit einem Fahrerarbeitsplatz (7), der von einer Fahrerstandplattform (8) für eine stehende Bedienperson (P) gebildet ist und an einem Antriebsteil (A) des Flurförderzeugs (1) in Längsrichtung des Flurförderzeugs (1) zwischen einem Batteriefach (6) einer Traktionsbatterie und einer vertikalen Rückwand (9) des Antriebsteils (A) angeordnet ist, wobei die Fahrerstandplattform (8) mittels einer Parallelogrammaufhängung (10) an dem Antriebsteil (A) in vertikaler Richtung bewegbar aufgehängt ist und die Fahrerstandplattform (10) mittels einer Feder-Dämpfereinrichtung (11), die mindestens ein Federelement (12; 12a, 12b) und ein Dämpferelement (13) umfasst, an dem Antriebsteil (A) abgestützt ist, **dadurch gekennzeichnet, dass** das mindestens eine Federelement (12; 12a, 12b) der Feder-Dämpfereinrichtung (11) in vertikaler Richtung oberhalb der Fahrerstandplattform (8) angeordnet ist und eine horizontale, in Fahrzeuglängsrichtung ausgerichtete Betätigungsrichtung (BR) aufweist.

2. Flurförderzeug nach Anspruch 1, **dadurch gekennzeichnet, dass** die Parallelogrammaufhängung (10) einen ersten Lenker (15) aufweist, der an einer ersten Gelenkverbindung (G1) mit dem Antriebsteil (A) und an einer zweiten Gelenkverbindung (G2) mit der Fahrerstandplattform (8) gelenkig verbunden ist, und einen zweiten Lenker (16) aufweist, der an einer dritten Gelenkverbindung (G3) mit dem Antriebsteil (A) und an einer vierten Gelenkverbindung (G4) mit der Fahrerstandplattform (8) gelenkig verbunden ist, wobei die erste Gelenkverbindung (G1) und die dritte Gelenkverbindung (G3) an dem Antriebsteil (A) um einen horizontalen Abstand (HA) und einen vertikalen Abstand (HV) voneinander beabstandet angeordnet sind und wobei die zweite Gelenkverbindung (G2) und die vierte Gelenkverbindung (G4) an der Fahrerstandplattform (8) um im Wesentlichen denselben horizontalen Abstand (HA) und im Wesentlichen denselben vertikalen Abstand (HV) voneinander beabstandet angeordnet sind.

3. Flurförderzeug nach Anspruch 2, **dadurch gekennzeichnet, dass** die zweite Gelenkverbindung (G2) und die vierte Gelenkverbindung (G4) an der Unterseite der Fahrerstandplattform (8) angeordnet sind.

4. Flurförderzeug nach einem der Ansprüche 1 bis 3, **dadurch gekennzeichnet, dass** das mindestens eine Federelement (12; 12a, 12b) angrenzend an das Batteriefach (6) angeordnet ist.

5. Flurförderzeug nach einem der Ansprüche 2 bis 4, **dadurch gekennzeichnet, dass** das mindestens eine Federelement (12; 12a, 12b) von einem der beiden Lenker (15; 16), insbesondere dem ersten Lenker (15), betätigbar ist, und der Lenker (15) als Winkelhebel ausgebildet ist.

6. Flurförderzeug nach einem der Ansprüche 2 bis 5, **dadurch gekennzeichnet, dass** der erste Lenker (15) von zwei in Fahrzeugquerrichtung beabstandet angeordneten Lenkerelementen (15a, 15b) gebildet ist, die mit einer Querplatte (35) verbunden sind, mittels der das mindestens eine Federelement (12; 12a, 12b) betätigbar ist.

7. Flurförderzeug nach Anspruch 6, **dadurch gekennzeichnet, dass** der zweite Lenker (16) zwischen den beiden Lenkerelementen (15a, 15b) angeordnet ist.

8. Flurförderzeug nach einem der Ansprüche 2 bis 7, **dadurch gekennzeichnet, dass** das Dämpferelement (13) mit einem der beiden Lenker (15; 16), insbesondere dem zweiten Lenker (16), oder der Fahrerstandplattform (8) verbunden ist.

9. Flurförderzeug nach einem der Ansprüche 1 bis 8, **dadurch gekennzeichnet, dass** das Dämpferelement (13) an der Fahrerstandplattform (8) in Fahrzeuglängsrichtung gegenüberliegend zu dem mindestens einen Federelement (12; 12a, 12b) angeordnet ist.

10. Flurförderzeug nach einem der Ansprüche 1 bis 9, **dadurch gekennzeichnet, dass** das Dämpferelement (13) angrenzend an die vertikale Rückwand (9) des Antriebsteils (A) angeordnet ist und an der vertikalen Rückwand (9) des Antriebsteils (A) befestigt ist.

11. Flurförderzeug nach einem der Ansprüche 1 bis 10, **dadurch gekennzeichnet, dass** das Feder-Dämpferelement (11) zwei Federelemente (12a, 12b) aufweist, die parallel wirkend angeordnet sind.

12. Flurförderzeug nach Anspruch 11, **dadurch gekennzeichnet, dass** im Ausgangszustand bei unbelasteter Fahrerstandplattform (8) der die Federelemente (12a, 12b) betätigende Lenker (15; 16), insbesondere der erste Lenker (15), nur mit dem zweiten Federelement (12b) in Wirkverbindung steht und zwischen dem Lenker (15; 16) und dem ersten Federelement (12a) ein Freihubbereich (FH) ausgebildet ist, in dem das erste Federelement (12a) nicht betätigt ist, wobei ein Anwesenheitssensor (40) vorgesehen ist, der eine auf der Fahrerstandplattform (8) befindliche Bedienperson (P) erfasst, wobei der Anwesenheitssensor (40) von einem der beiden Lenker (15 16), insbesondere dem ersten Lenker (15), in dem Freihubbereich (FH) betätigbar ist.

13. Flurförderzeug nach Anspruch 12, **dadurch gekennzeichnet, dass** das erste Federelement (12a) mit einer Begrenzungseinrichtung (46) in Wirkverbindung steht, die die Entspannung des ersten Federelements (12a) begrenzt.

14. Flurförderzeug nach einem der Ansprüche 2 bis 13, **dadurch gekennzeichnet, dass** ein Trägerbauteil (50) vorgesehen ist, an dem die erste Gelenkverbindung (G1) und die dritte Gelenkverbindung (G3) ausgebildet sind und an der das mindestens eine Federelement (12; 12a, 12b) angeordnet ist, wobei das Trägerbauteil (50) eine Befestigungsschnittstelle (51) aufweist, mit der das Trägerbauteil (50) an dem Antriebsteil (A) befestigbar ist.

15. Flurförderzeug nach einem der Ansprüche 1 bis 14, **dadurch gekennzeichnet, dass** das Federelement (12a) als Luftfeder (60) ausgebildet ist.

16. Flurförderzeug nach einem der Ansprüche 1 bis 15, **dadurch gekennzeichnet, dass** das Federelement (12a) zur Anpassung an das Körpergewicht der Bedienperson (P) in der Federsteifigkeit einstellbar ist.

17. Flurförderzeug nach einem der Ansprüche 1 bis 16, **dadurch gekennzeichnet, dass** das Federelement (12b) als Spiraldruckfeder (62) ausgebildet ist.

18. Flurförderzeug nach einem der Ansprüche 1 bis 17, **dadurch gekennzeichnet, dass** das Dämpferelement (13) als hydraulischer Dämpfer ausgebildet ist.

## Claims

1. Industrial truck (1) having a driver's workstation (7) which is formed by a driver's platform (8) for a standing operator (P) and is arranged on a drive part (A) of the industrial truck (1) in the longitudinal direction of the industrial truck (1) between a battery compartment (6) for a traction battery and a vertical rear wall (9) of the drive part (A), wherein the driver's platform (8) is suspended on the drive part (A) so as to be movable in a vertical direction by means of a parallelogram suspension (10), and the driver's platform (10) is supported on the drive part (A) by means of a spring-damper device (11) which comprises at least one spring element (12; 12a, 12b) and a damper element (13), **characterized in that** the at least one spring element (12; 12a, 12b) of the spring-damper device (11) is arranged above the driver's platform (8) in the vertical direction and has a horizontal actuating direction (BR) oriented in the vehicle longitudinal direction.

2. Industrial truck according to Claim 1, **characterized in that** the parallelogram suspension (10) has a first link (15), which is connected in an articulated manner to the drive part (A) at a first articulated joint (G1) and to the driver's platform (8) at a second articulated joint (G2), and has a second link (16), which is connected in an articulated manner to the drive part (A) at a third articulated joint (G3) and to the driver's platform (8) at a fourth articulated joint (G4), wherein the first articulated joint (G1) and the third articulated joint (G3) are arranged on the drive part (A) in a manner spaced apart from one another by a horizontal distance (HA) and a vertical distance (HV) and wherein the second articulated joint (G2) and the fourth articulated joint (G4) are arranged on the driver's platform (8) in a manner spaced apart from one another by substantially the same horizontal distance (HA) and substantially the same vertical distance (HV).

3. Industrial truck according to Claim 2, **characterized in that** the second articulated joint (G2) and the fourth articulated joint (G4) are arranged on the underside of the driver's platform (8).

4. Industrial truck according to one of Claims 1 to 3, **characterized in that** the at least one spring element (12; 12a, 12b) is arranged in a manner adjoining the battery compartment (6).

5. Industrial truck according to one of Claims 2 to 4, **characterized in that** the at least one spring element (12; 12a, 12b) is actuable by one of the two links (15; 16), in particular the first link (15), and the link (15) is configured as an angle lever.

6. Industrial truck according to one of Claims 2 to 5, **characterized in that** the first link (15) is formed by two link elements (15a, 15b) which are arranged in a spaced-apart manner in the vehicle transverse direction and are connected by a cross plate (35), by means of which the at least one spring element (12; 12a, 12b) is actuable.

7. Industrial truck according to Claim 6, **characterized in that** the second link (16) is arranged between the two link elements (15a, 15b).

8. Industrial truck according to one of Claims 2 to 7, **characterized in that** the damper element (13) is connected to one of the two links (15; 16), in particular the second link (16), or the driver's platform (8).

9. Industrial truck according to one of Claims 1 to 8, **characterized in that** the damper element (13) is arranged on the driver's platform (8) opposite the at least one spring element (12; 12a, 12b) in the vehicle longitudinal direction.

10. Industrial truck according to one of Claims 1 to 9, **characterized in that** the damper element (13) is arranged in a manner adjoining the vertical rear wall (9) of the drive part (A) and is fastened to the vertical rear wall (9) of the drive part (A).

11. Industrial truck according to one of Claims 1 to 10, **characterized in that** the spring-damper element (11) has two spring elements (12a, 12b) which are arranged in a manner acting in parallel.

12. Industrial truck according to Claim 11, **characterized in that**, in the starting state with the driver's platform (8) not loaded, the link (15; 16) that actuates the spring elements (12a, 12b), in particular the first link (15), is operatively connected only to the second spring element (12b), and a free-lift region (FH), in which the first spring element (12a) is not actuated, is formed between the link (15; 16) and the first spring element (12a), wherein a presence sensor (40) is provided, which detects an operator (P) located on the driver's platform (8), wherein the presence sensor (40) is actuable by one of the two links (15; 16), in particular the first link (15), in the free-lift region (FH).

13. Industrial truck according to Claim 12, **characterized in that** the first spring element (12a) is operatively connected to a limiting device (46) which limits the relaxation of the first spring element (12a).

14. Industrial truck according to one of Claims 2 to 13, **characterized in that** a carrier component (50) is provided, on which the first articulated joint (G1) and the third articulated joint (G3) are formed and on which the at least one spring element (12; 12a, 12b) is arranged, wherein the carrier component (50) has a fastening interface (51) with which the carrier component (50) is able to be fastened to the drive part (A).

15. Industrial truck according to one of Claims 1 to 14, **characterized in that** the spring element (12a) is configured as an air spring (60).

16. Industrial truck according to one of Claims 1 to 15, **characterized in that** the spring element (12a) has a settable spring stiffness for adaptation to the body weight of the operator (P).

17. Industrial truck according to one of Claims 1 to 16, **characterized in that** the spring element (12b) is configured as a spiral compression spring (62).

18. Industrial truck according to one of Claims 1 to 17, **characterized in that** the damper element (13) is configured as a hydraulic damper.

## Revendications

1. Chariot de manutention (1) muni d'un poste de travail de conducteur (7), qui est formé par une plateforme de conducteur (8) pour un opérateur debout (P) et est agencé sur une partie d'entraînement (A) du chariot de manutention (1) dans la direction longitudinale du chariot de manutention (1) entre un compartiment à batterie (6) d'une batterie de traction et une paroi arrière verticale (9) de la partie d'entraînement (A), la plateforme de conducteur (8) étant suspendue de manière mobile dans la direction verticale à la partie d'entraînement (A) au moyen d'une suspension à parallélogramme (10), et la plateforme de conducteur (10) s'appuyant au moyen d'un appareil amortisseur à ressort (11), qui comprend au moins un élément ressort (12 ; 12a, 12b) et un élément amortisseur (13), sur la partie d'entraînement (A), **caractérisé en ce que** l'au moins un élément ressort (12 ; 12a, 12b) de l'appareil amortisseur à ressort (11) est agencé dans la direction verticale au-dessus de la plateforme de conducteur (8), et présente une direction d'actionnement (BR) horizontale, dirigée dans la direction longitudinale du véhicule.

2. Chariot de manutention selon la revendication 1, **caractérisé en ce que** la suspension à parallélogramme (10) comprend un premier bras articulé (15), qui est relié de manière articulée au niveau d'une première liaison articulée (G1) avec la partie d'entraînement (A) et au niveau d'une deuxième liaison articulée (G2) avec la plateforme de conducteur (8), et un deuxième bras articulé (16), qui est relié de manière articulée au niveau d'une troisième liaison articulée (G3) avec la partie d'entraînement (A) et au niveau d'une quatrième liaison articulée (G4) avec la plateforme de conducteur (8), la première liaison articulée (G1) et la troisième liaison articulée (G3) étant agencées espacées l'une de l'autre d'un écart horizontal (HA) et d'un écart vertical (HV) sur la partie d'entraînement (A), et la deuxième liaison articulée (G2) et la quatrième liaison articulée (G4) étant agencées espacées l'une de l'autre essentiellement du même écart horizontal (HA) et essentiellement du même écart vertical (HV) sur la plateforme de conducteur (8).

3. Chariot de manutention selon la revendication 2, **caractérisé en ce que** la deuxième liaison articulée (G2) et la quatrième liaison articulée (G4) sont agencées sur le côté inférieur de la plateforme de conducteur (8).

4. Chariot de manutention selon l'une quelconque des revendications 1 à 3, **caractérisé en ce que** l'au moins un élément ressort (12 ; 12a, 12b) est agencé adjacent au compartiment à batterie (6).

5. Chariot de manutention selon l'une quelconque des revendications 2 à 4, **caractérisé en ce que** l'au moins un élément ressort (12 ; 12a, 12b) est actionnable par un des deux bras articulés (15 ; 16), notamment par le premier bras articulé (15), et le bras articulé (15) est configuré sous la forme d'un levier coudé.

6. Chariot de manutention selon l'une quelconque des revendications 2 à 5, **caractérisé en ce que** le premier bras articulé (15) est formé par deux éléments de bras articulé (15a, 15b) agencés espacés dans la direction transversale du véhicule, qui sont reliés avec une plaque transversale (35), au moyen de laquelle l'au moins un élément ressort (12 ; 12a, 12b) est actionnable.

7. Chariot de manutention selon la revendication 6, **caractérisé en ce que** le deuxième bras articulé (16) est agencé entre les deux éléments de bras articulé (15a, 15b).

8. Chariot de manutention selon l'une quelconque des revendications 2 à 7, **caractérisé en ce que** l'élément amortisseur (13) est relié à un des deux bras articulés (15 ; 16), notamment au deuxième bras articulé (16), ou à la plateforme de conducteur (8).

9. Chariot de manutention selon l'une quelconque des revendications 1 à 8, **caractérisé en ce que** l'élément amortisseur (13) est agencé sur la plateforme de conducteur (8) dans la direction longitudinale du véhicule à l'opposé de l'au moins un élément ressort (12 ; 12a, 12b).

10. Chariot de manutention selon l'une quelconque des revendications 1 à 9, **caractérisé en ce que** l'élément amortisseur (13) est agencé adjacent à la paroi arrière verticale (9) de la partie d'entraînement (A) et est fixé à la paroi arrière verticale (9) de la partie d'entraînement (A).

11. Chariot de manutention selon l'une quelconque des revendications 1 à 10, **caractérisé en ce que** l'élément amortisseur à ressort (11) comprend deux éléments ressorts (12a, 12b), qui sont agencés de manière à agir en parallèle.

12. Chariot de manutention selon la revendication 11 **caractérisé en ce qu'**à l'état initial lorsque la plateforme de conducteur (8) n'est pas chargée, le bras articulé (15 ; 16) actionnant les éléments ressorts
(12a, 12b), notamment le premier bras articulé (15), est en liaison fonctionnelle uniquement avec le deuxième élément ressort (12b), et une zone de course libre (FH) est formée entre le bras articulé (15 ; 16) et le premier élément ressort (12a), dans laquelle le premier élément ressort (12a) n'est pas actionné, un capteur de présence (40) étant prévu, qui détecte un opérateur (P) se trouvant sur la plateforme de conducteur (8), le capteur de présence (40) étant actionnable par un des deux bras articulés (15 ; 16), notamment le premier bras articulé (15), dans la zone de course libre (FH).

13. Chariot de manutention selon la revendication 12, **caractérisé en ce que** le premier élément ressort (12a) est en liaison fonctionnelle avec un appareil de limitation (46), qui limite la détente du premier élément ressort (12a).

14. Chariot de manutention selon l'une quelconque des revendications 2 à 13, **caractérisé en ce qu'**un composant support (50) est prévu, sur lequel la première liaison articulée (G1) et la troisième liaison articulée (G3) sont formées, et sur lequel l'au moins un élément ressort (12 ; 12a, 12b) est agencé, le composant support (50) comprenant une interface de fixation (51), avec laquelle le composant support (50) peut être fixé à la partie d'entraînement (A).

15. Chariot de manutention selon l'une quelconque des revendications 1 à 14, **caractérisé en ce que** l'élément ressort (12a) est configuré sous la forme d'un ressort pneumatique (60).

16. Chariot de manutention selon l'une quelconque des revendications 1 à 15, **caractérisé en ce que** l'élément ressort (12a) est ajustable en termes de dureté du ressort pour s'adapter au poids corporel de l'opérateur (P).

17. Chariot de manutention selon l'une quelconque des revendications 1 à 16, **caractérisé en ce que** l'élément ressort (12b) est configuré sous la forme d'un ressort de pression à spirale (62).

18. Chariot de manutention selon l'une quelconque des revendications 1 à 17, **caractérisé en ce que** l'élément amortisseur (13) est configuré sous la forme d'un amortisseur hydraulique.
